# EUROPEAN PATENT APPLICATION

(11) **EP 1 916 564 A1**
(43) Date of publication of application: **30.04.2008**
(21) Application number: 07106120.4
(22) Date of filing: 13.04.2007
(51) Int. Cl.: G02F 1/13357, G02F 1/1335, G02F 1/1333, G02F 1/13

(54) **Light dispersion member and unit for liquid crystal display device and method for manufacturing the same**

(30) Priority: 27.10.2006 JP 2006292949
(71) Applicant: Sansei Co., Ltd., Koba-shi, Shiga 528-0068 (JP)
(72) Inventor: Nakajima, Hiroshi, Koka-shi Shiga 528-0068 (JP); Nozaki, Motohiro, Koka-shi Shiga 528-0068 (JP); Mizutani, Kyoichiro, Koka-shi Shiga 528-0068 (JP)
(74) Representative: Skuhra, Udo

(57) **Abstract**

Problem To be Solved: To provide a light dispersion member (12) that does not easily bend or distort in spite of having a light dispersion panel (205) of only about 0.5 mm thickness, that can be easily built into a backlight unit, and that can contribute to a reduction of manufacturing costs of the overall LCD device, as well as to provide a frame (11) into which such a light dispersion member (12) can be fitted.
Means of Solving the Problem: A force maintaining the planarity of a thin light dispersion panel (205) is strengthened by folding edges of the thin light dispersion panel (205) to a predetermined angle (A), and small holes (9) are provided in the folded lateral panels (3,4,5,6). Thus, the light dispersion member (12) can be easily inserted into grooves (13,14,15,16) of a frame (11) with protrusions (19) arranged at a lateral wall (515) of the grooves (13,14,15,16), and after the assembly, the light dispersion member (12) is not easily separated from the frame (11). In a further embodiment, the configuration of the light dispersion member (12) is such that no holes (9) are provided in the lateral panels (3,4,5,6) and the front ends of the lateral panels (3,4,5,6) are provided with lower edge panel portions (803,804,805,806). The configuration of the attachment grooves (13,14,15,16) of the frame (11) includes a projecting portion (815) of the L-shaped groove.

## Description

### TECHNICAL FIELD

The present invention relates to a light dispersion member used for a liquid crystal display device, and to a frame in which the light dispersion member is installed.

### BACKGROUND ART

In recent years, as liquid crystal display (LCD) devices have become widespread as display devices for television receivers, the trend towards larger display screens and lower prices of liquid crystal display devices has accelerated. In order to make the screen of an LCD device larger, it is necessary to increase the size of the light dispersion panel, which is one of its components. Moreover, in order to realize lower costs for an LCD device with a large screen, it is necessary to develop a light dispersion panel, as one of its components, that can contribute to lower prices and/or better productivity. It is also desirable for a television receiver to be as flat as possible.

A conventional light dispersion panel has a certain thickness, and even a light dispersion panel used for an LCD television of about 32 inches was so thick that it was hardly bent at all.

A conventional light dispersion panel is disclosed for example in Japanese Patent Application JP 2004-198725A.

However, although in recent years light dispersion panels have been developed having a sufficient light dispersion capability in spite of being very thin with a panel thickness of about 0.5 mm, when such light dispersion panels are used as light dispersion panels for liquid crystal panels of about 32 inches, bending in the center region causes distortion at the peripheral portions, and also in the manufacturing process as well as in the final product, there were noticeable problems with such bending and distortion.

Moreover, when attempting to solve this problem of bending and distortions by providing supporting protrusions for supporting the light dispersion member from the rear side, then it is necessary to considerably increase the number of supporting protrusions, which are at present provided only at several locations, leading to the problem of shadows of the protrusions being projected onto the screen. Consequently, the problem cannot be solved by arranging supporting protrusions. This is explained with reference to the figures.

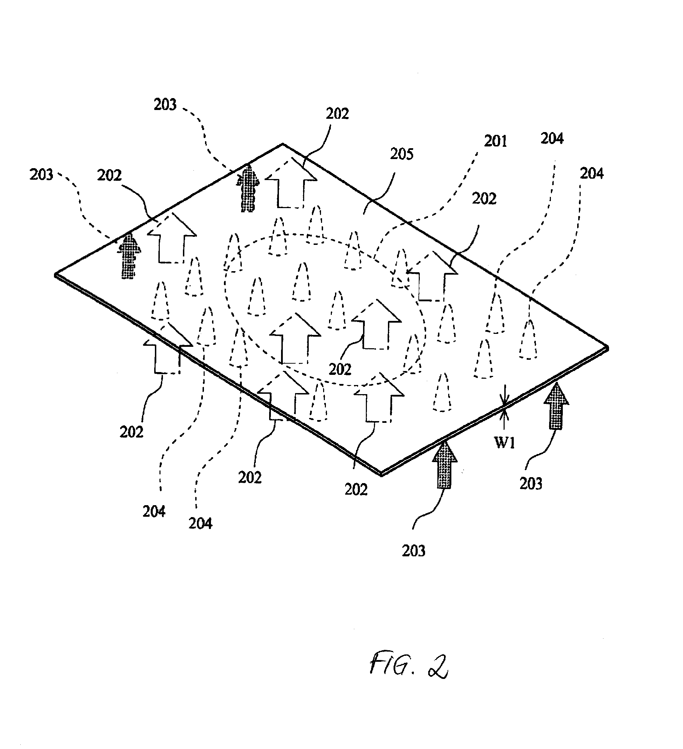

Fig. 2 is a perspective view showing a thin light dispersion panel, the locations at which a frame is supported when the light dispersion panel is installed in that frame, and the direction of light rays from a light source of a backlight.

In Fig. 2, numeral 205 denotes a light dispersion panel of low thickness, numerals 203 denote arrows indicating the locations at which that light dispersion panel is supported when being installed in a frame, numerals 202 denote arrows indicating the direction of light rays from a light source of the backlight, numeral 201 indicates a center region of the light dispersion panel, numeral 204 denotes supporting protrusions for preventing bending or distortion of the light dispersion panel 205, and W1 denotes the thickness of the light dispersion panel.

If, using this light dispersion panel 205 of low thickness, a large light dispersion panel 205 for a large screen of about 32 inches is fabricated, and this light dispersion panel 205 is supported at the locations indicated by the arrows 203 at the perimeter of the light dispersion panel, then the center region 201 of the light dispersion panel droops down due to gravity, and the light dispersion panel is bent. Furthermore, distortions occur at the perimeter. When such bending or distortions occur, this may not only have an adverse influence on the operating efficiency in the manufacturing process, but may also have an adverse influence on the finished product, after the light dispersion panel has actually been built into the LCD device.

On the other hand, when a suitable number of supporting protrusions 204 for preventing such bending are provided, there is the problem that when an image is actually displayed on the liquid crystal screen, the light rays from the light source of the backlight arranged near the supporting protrusions 204 are irradiated and shadows of the supporting rods 204 are projected onto the screen.

At present, even when using a light dispersion panel with a conventional thickness of about 2 mm, which does not bend easily, such supporting protrusions 204 are used, but considering the problem of these projections, they are limited to a minimal number and it is problematic to increase the number of these supporting protrusions 204 beyond the number presently used.

From another viewpoint, in order to reduce the manufacturing costs of the overall LCD device, it is also desirable to devise a light dispersion panel that can be easily built into a backlight unit and that can contribute to an improvement of the operating efficiency.

Accordingly, it is an object of the present invention to provide a light dispersion member that does not easily bend in spite of having a thin light dispersion panel, that can be easily built into a backlight unit, and that can contribute to a reduction of manufacturing costs of the overall LCD device, as well as to provide a frame into which such a light dispersion member can be fitted.

In order to solve the problem of the problem that the light dispersion panel is thin and that with a flat panel, the light dispersion panel tends to bend and its handling is difficult, the inventors have found that by folding the edges of the light dispersion panel by a suitable amount, the light dispersion panel tends to bend (warp) less, and by arranging holes in the folded portion, it becomes possible to fasten the light dispersion panel with a single movement to a frame, and to lower the manufacturing costs for the LCD device.

In order to solve the above-stated problem, in accordance with a first aspect, a light dispersion member for a liquid crystal display device is provided, the light dispersion member being obtained by folding a light dispersion panel that is so thin that it bends when supported at two opposing edges and held horizontally,
the light dispersion member comprising a rectangular upper panel and lateral panels extending away (e.g. downward) from the rectangular upper panel by folding at the four sides of the upper panel,
wherein a force that prevents the thin upper panel from being bent and that maintains its planarity is strengthened by folding the lateral panels at the four sides of the upper panel, such that the lateral panels extend away from the rectangular upper panel.

More specifically, the lateral panels can be arranged in a plane that does not coincide with a plane in which the rectangular upper panel is arranged. That is, they can be arranged at a certain angle that is different from 180° with respect to the rectangular upper panel.

If the light dispersion member is thin, then the problem of the tendency to bend (warp) is solved, as a force acting to maintain the planarity of the planar portion is applied to the light dispersion panel itself by folding the edges of the light dispersion panel.

Moreover, in accordance with a second aspect, in the light dispersion member for a liquid crystal display device according to the first aspect,
the lateral panels comprise holes; and
when the lateral panels of the light dispersion member for a liquid crystal display device are inserted into attachment grooves of a frame having said grooves and protrusions provided at an inner side of an outer wall of the grooves, the protrusions fit into the holes, and the light dispersion member for a liquid crystal display device is fastened to the frame, such that it is not easily separated therefrom.

By providing holes in the lateral panels, the liquid crystal display device light dispersion member can be easily attached to a frame having predetermined grooves and protrusions, and after being attached, the light dispersion member is not easily separated from the frame.

In accordance with a third aspect, in the light dispersion member for a liquid crystal display device according to the first aspect,
the lateral panels each comprise a lower edge panel portion that is folded outward from a lower edge of the lateral panel; and
when the lateral panels of the light dispersion member for a liquid display device are inserted into attachment grooves of a frame, which have a projecting portion projecting to the outside at an intermediate portion of the grooves, the lower edge panel portions are fitted into the projecting portions, and the light dispersion member for a liquid display device is fastened to the frame, such that it is not easily separated therefrom.

By providing the lateral panels with lower edge panel portions, the liquid crystal display device light dispersion member can be easily attached to a frame having predetermined grooves with projecting portions at an intermediate portion of the grooves, and after being attached, the light dispersion member is not easily separated from the frame.

In accordance with a fourth aspect, in the light dispersion member for a liquid crystal display device according to any of the first to third aspects,
an angle defined by the lateral panels and the upper panel is at least 95 degrees and at most 135 degrees.

It was found that when the angle defined by the lateral panels and the upper panel is at least 95 degrees and at most 135 degrees, the lateral panels are easily inserted into the grooves of the frame, and after the insertion, the protrusions of the frame are held by the holes in the lateral panels.

In accordance with a fifth aspect, in the light dispersion member for a liquid crystal display device according to any of the first to fourth aspects,
a longer side of the rectangular upper panel has a length of approximately 640 to 780 mm, and a shorter side of the rectangular upper panel has a length of approximately 370 to 450 mm, and a thickness of the panel is approximately 0.45 to 0.55 mm.

In accordance with a sixth aspect, in the light dispersion member for a liquid crystal display device according to any of the first to fifth aspects,
a material of the light dispersion panel is polycarbonate.

In accordance with a seventh aspect, a light dispersion unit for a liquid crystal display device is provided, the light dispersion unit comprising:
a light dispersion member for a liquid display device, the light dispersion member being obtained by folding a light dispersion panel that is so thin that it bends when supported at two opposing edges and held horizontally; and
a frame into which the light dispersion member is fitted;
wherein the light dispersion member comprises a rectangular upper panel and lateral panels that extend away from the rectangular upper panel by being folded at the four sides of the upper panel;
wherein the lateral panels comprise holes;
wherein a force that prevents the thin upper panel from being bent and that maintains its planarity is strengthened by folding the lateral panels at the four sides of the upper panel, such that the lateral panels extend away from the rectangular upper panel;
wherein the frame comprises grooves into which the light dispersion member is fitted;
wherein protrusions are provided at an inner side of an outer wall of the grooves;
wherein, when the lateral panels of the light dispersion member for a liquid display device are inserted into the grooves, the protrusions fit into the holes, and the light dispersion member for a liquid display device is fastened to the frame, such that it is not easily separated therefrom.

Here, a light dispersion member having holes in its lateral panels and a frame into which the light dispersion member can be easily fitted form a set.

In accordance with an eighth aspect, a light dispersion unit for a liquid crystal display device is provided, the light dispersion unit comprising:
a light dispersion member for a liquid display device, the light dispersion member being obtained by folding a light dispersion panel that is so thin that it bends when supported at two opposing edges and held horizontally; and
a frame into which the light dispersion member is fitted;
wherein the light dispersion member comprises a rectangular upper panel and lateral panels that extend away from the rectangular upper panel by being folded at the four sides of the upper panel;
wherein the lateral panels each comprise a lower edge panel portion that is folded outward from a lower edge of the lateral panel;
wherein a force that prevents the thin upper panel from being bent and that maintains its planarity is strengthened by folding the lateral panels at the four sides of the upper panel, such that the lateral panels extend away from the rectangular upper panel;
wherein the frame comprises grooves for fitting the light dispersion member into the frame;
wherein the grooves comprise a projecting portion projecting to the outside at an intermediate portion of the grooves;
wherein, when the lateral panels of the light dispersion member for a liquid crystal display device are inserted into the grooves of the frame, the lower edge panel portions engage the projecting portions, and the light dispersion member for a liquid display device is fastened to the frame, such that it is not easily separated therefrom.

Here, a light dispersion member, whose lateral panels are provided with a lower edge panel portion, and a frame into which the light dispersion member can be easily fitted form a set.

In accordance with a ninth aspect, in the light dispersion unit for a liquid crystal display device according to the seventh or eighth aspect,
an angle defined by the lateral panels and the upper panel is at least 95 degrees and at most 135 degrees.

In accordance with a tenth aspect, in the light dispersion unit for a liquid crystal display device according to any of the seventh to ninth aspects,
a longer side of the rectangular upper panel has a length of approximately 640 to 780 mm, a shorter side of the rectangular upper panel has a length of approximately 370 to 450 mm, and a thickness of the panel is approximately 0.45 to 0.55 mm.

In accordance with an eleventh aspect, in the light dispersion unit for a liquid crystal display device according to any of the seventh to tenth aspects,
a material of the light dispersion panel is polycarbonate.

In accordance with a twelfth aspect, a method is provided for manufacturing a light dispersion member for a liquid crystal display device using a light dispersion panel that is so thin that it bends when supported at two opposing edges and held horizontally, the method comprising:
a step of cutting the light dispersion panel into a rectangular shape having a cutout at each of its comers; and
a step of folding the edges of the light dispersion panel, which has been cut into the rectangular shape having a cutout at each of its corners, to fabricate lateral panels extending away from the rectangular upper panel from the rectangular upper panel;
wherein a force that prevents the thin upper panel from being bent and that maintains its planarity is strengthened by folding the lateral panels at the four sides of the upper panel, such that the lateral panels extend away from the rectangular upper panel.

In accordance with a thirteenth aspect, a method is provided for manufacturing a light dispersion member for a liquid crystal display device using a light dispersion panel that is so thin that it bends when supported at two opposing edges and held horizontally, the method comprising:
a step of cutting the light dispersion panel into a rectangular shape having a cutout at each of its comers;
a step of opening holes at the edges of the optical dispersion panel; and
a step of fabricating lateral panels extending away from the rectangular upper panel from the rectangular upper panel by folding the edges of the light dispersion member, which has been cut into a rectangular shape having a cutout at each of its comers;
wherein a force that prevents the thin upper panel from being bent and that maintains its planarity is strengthened by folding the lateral panels at the four sides of the upper panel, such that the lateral panels extend away from the rectangular upper panel; and
wherein, when the lateral panels of the light dispersion member for a liquid display device are inserted into attachment grooves of a frame having said attachment grooves and protrusions provided at an inner side of an outer wall of the grooves, the protrusions fit into the holes, and the light dispersion member for a liquid display device is fastened to the frame, such that it is not easily separated therefrom.

In accordance with a fourteenth aspect, in the method for manufacturing a light dispersion member for a liquid crystal display device according to the twelfth or thirteenth aspect,
an angle defined by the lateral panels and the upper panel is at least 95 degrees and at most 135 degrees.

In accordance with a fifteenth aspect, in the method for manufacturing a light dispersion member for a liquid crystal display device according to any of the twelfth to fourteenth aspects,
a longer side of the rectangular upper panel has a length of approximately 640 to 780 mm, a shorter side of the rectangular upper panel has a length of approximately 370 to 450 mm, and a thickness of the panel is approximately 0.45 to 0.55 mm.

In accordance with a sixteenth aspect, a method is provided for manufacturing a light dispersion unit for a liquid crystal display device, the light dispersion unit comprising a light dispersion member using a light dispersion panel that is so thin that it bends when supported at two opposing edges and held horizontally, and a frame into which the light dispersion member is fitted; the method comprising:
a step of cutting the light dispersion panel into a rectangular shape having a cutout at each of its comers;
a step of opening holes at the edges of the optical dispersion panel;
a step of fabricating lateral panels extending away from the rectangular upper panel from the rectangular upper panel by folding the edges of the light dispersion member, which has been cut into a rectangular shape having a cutout at each of its comers;
a step of fabricating grooves in the frame, the grooves being such that the light dispersion member can be fitted into them; and
a step of fabricating protrusions on the inner side of an outer wall of the grooves;
wherein a force that prevents the thin upper panel from being bent and that maintains its planarity is strengthened by folding the lateral panels at the four sides of the upper panel, such that the lateral panels extend away from the rectangular upper panel; and
wherein, when the lateral panels of the light dispersion member for a liquid display device are inserted into grooves of a frame, which has attachment grooves and protrusions provided at an inner side of an outer wall of the grooves, the protrusions fit into the holes, and the light dispersion member for a liquid display device is fastened to the frame, such that it is not easily separated therefrom.

In accordance with a seventeenth aspect, in the method for manufacturing a light dispersion unit for a liquid crystal display device according to the sixteenth aspect,
an angle defined by the lateral panels and the upper panel is at least 95 degrees and at most 135 degrees.

In accordance with an eighteenth aspect, in the method for manufacturing a light dispersion unit for a liquid crystal display device according to the sixteenth or seventeenth aspect,
a longer side of the rectangular upper panel has a length of approximately 640 to 780 mm, a shorter side of the rectangular upper panel has a length of approximately 370 to 450 mm, and a thickness of the panel is approximately 0.45 to 0.55 mm.

With the present invention, even with a light dispersion panel that is so thin that it bends when supported at two opposing edges and held horizontally, a force maintaining the planarity of the light dispersion panel can be easily strengthened by folding the edges of the light dispersion panel. As a result, the production efficiency when attaching the light dispersion member is increased, and the quality of the display of the liquid crystal display screen due to the strengthening of the planarity-maintaining force.

Moreover, by providing the lateral panels with holes and setting the folding angle of the panels to within a predetermined range, it is possible to easily fit the light dispersion member into the frame, and once the light dispersion member is fitted into the frame, it is not easily separated therefrom, thus improving productivity and reliability.

Similarly, by providing the lateral panels with lower edge panel portions and setting the folding angle of the panels to within a predetermined range, it is possible to easily fit the light dispersion member into the frame, and once the light dispersion member is fitted into the frame, it is not easily separated therefrom, thus improving productivity and reliability.

### BRIEF DESCRIPTION OF THE DRAWINGS

Fig. 1 is a perspective view showing the overall configuration of a frame and a light dispersion member for an LCD device in accordance with a first embodiment of the present invention.
Fig. 2 is a perspective view showing a light dispersion panel of low thickness, the locations at which a frame is supported when the light dispersion panel is installed in that frame, and the direction of light rays from a light source of a backlight.
Fig. 3 is a cross-sectional view taken along the line Y-Y in Fig. 1.
Fig. 4 is a cross-sectional view taken along the line Z-Z in Fig. 6.
Fig. 5 is an enlarged perspective view of the portion designated by the numeral 601 in Fig. 6.
Fig. 6 is a perspective view showing an overview of the situation after the light dispersion member 12 has been fitted into the frame 11.
Fig. 7 is an enlarged perspective view of the portion designated 602 in Fig. 6.
Fig. 8 is a perspective view showing the overall configuration of a frame and a light dispersion member for an LCD device in accordance with a second embodiment of the present invention.
Fig. 9 is a perspective view illustrating the state in which the light dispersion member for an LCD display according to the second embodiment is fitted into the frame.
Fig. 10 is a perspective view showing an example of another embodiment in which the light dispersion member is fastened to the frame by letting a lower edge panel portion 805, which is made by folding over the front end of the lateral panel to an even acuter angle, engage the projecting portion arranged at an intermediate portion of the groove of the frame.
Fig. 11 shows a planar development of a light dispersion member according to the first embodiment.
Fig. 12 shows a planar development of a light dispersion member according to the second embodiment.

### PREFERRED EMBODIMENTS OF THE INVENTION

The following is an explanation of embodiments of the present invention, with reference to the accompanying drawings.

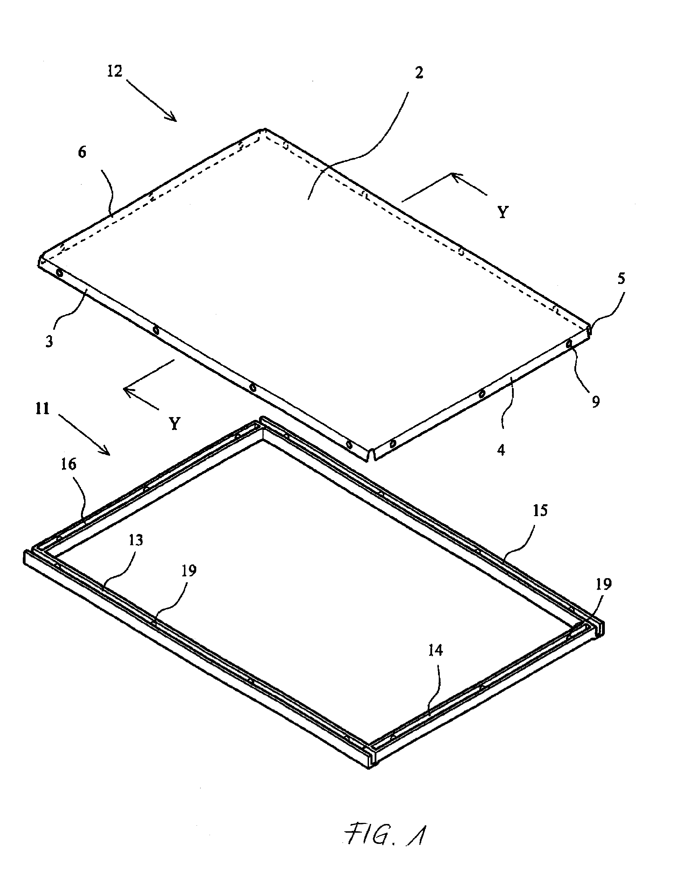

Fig. 1 is a perspective view showing the overall configuration of a light dispersion member for a liquid crystal display (LCD) device and a frame in accordance with a first embodiment of the present invention.

In Fig. 1, numeral 12 denotes a light dispersion member, numeral 2 denotes an upper panel of the light dispersion member, numerals 3 to 6 denote lateral panels of the light dispersion member, numeral 9 denotes holes that are provided in the lateral panels of the light dispersion member, numeral 11 denotes a frame, numerals 13 to 16 denote grooves provided in the frame into which the lateral panels 3 to 6 of the light dispersion member can be inserted, numeral 19 denotes protrusions arranged in the grooves of the frame, the protrusions fitting into the holes 9 that are provided in the lateral panels of the light dispersion member.

In this light dispersion member, the lateral panels 3 to 6 are formed by folding the edges of a thin light dispersion panel such that they extend away from the (plane of the) rectangular upper panel at the perimeter of the rectangular upper panel 2. By folding at the perimeter in this manner, the upper panel 2 will not bend (warp) so much as to compromise its function as a light dispersion panel of the LCD device, even when the length of the longer side of the upper plate 2 is about 720 mm and the length of its shorter side is about 420 mm. Furthermore, since the edge is simply folded over, new components are not necessary, so that also the manufacturing process is very simple.

The following is an explanation of the configuration of the light dispersion member, while explaining the process of fitting the light dispersion member 12 into the frame 11. In order to fit the light dispersion member 12 into the frame 11, the lateral panels 3 to 6 of the light dispersion member 12 are pressed into the grooves 13 to 16 of the frame. To press the lateral panels 3 to 6 into the grooves 13 to 16 of the frame 11, the lateral panels 3 to 6 are pressed into the gaps between the protrusions 19 and the inner walls on the inner side of the grooves 13 to 16. Accordingly, the protrusions 19 in the grooves are fitted into the holes 9 of the lateral panels. This is explained in more detail with reference to the drawings.

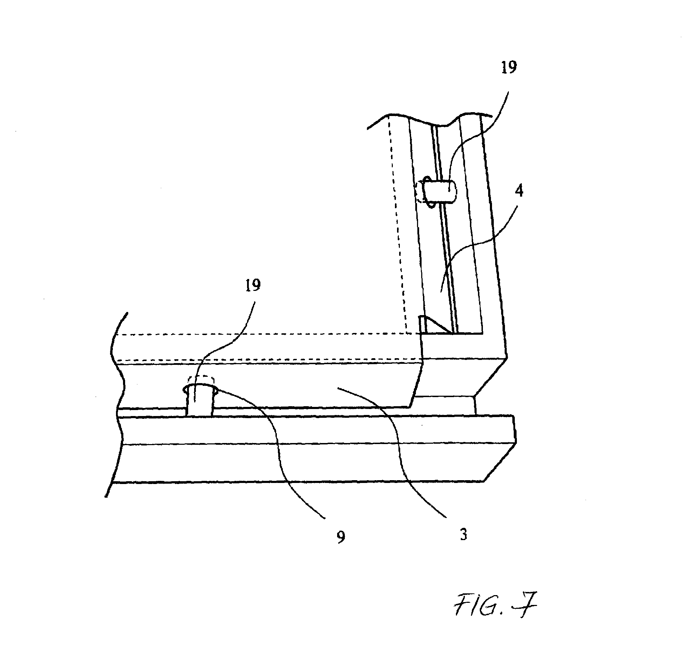

Fig. 6 is a perspective view showing an overview of the situation after the light dispersion member 12 has been fitted into the frame 11.

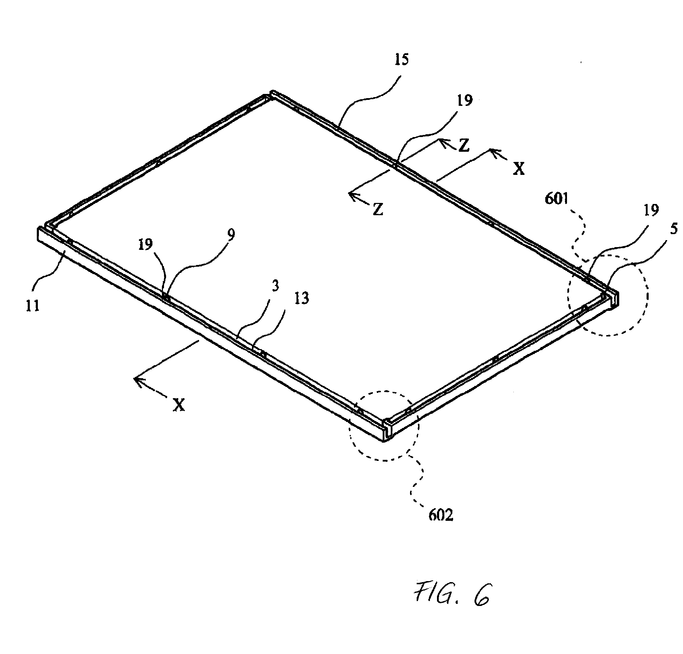

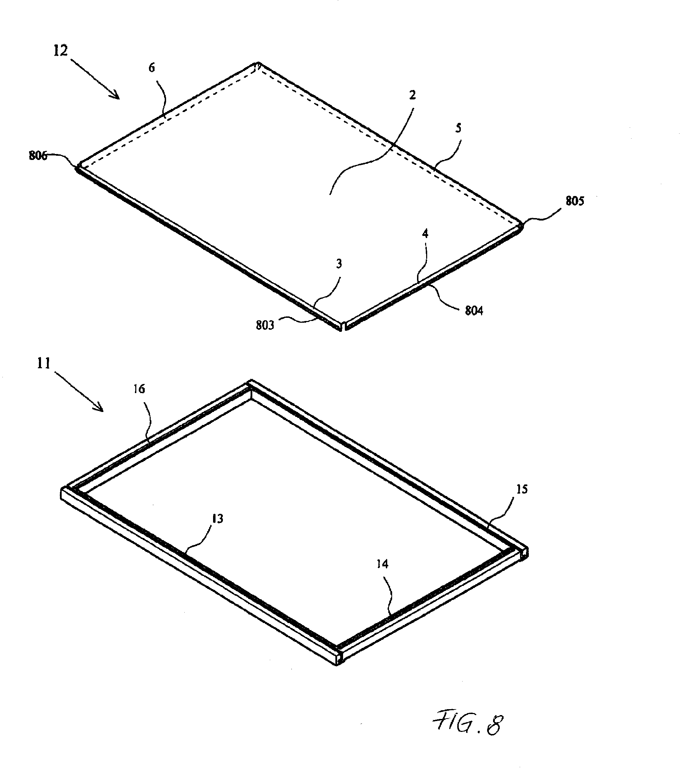

In Fig. 6, numeral 9 denotes the holes provided in the lateral panels of the light dispersion member, numeral 19 denotes the protrusions provided in the grooves of the frame, numeral 5 denotes the lateral panels, numeral 601 denotes a portion shown in an enlarged view in Fig. 5, numeral 602 denotes a portion shown in an enlarged view in Fig. 7, and numeral 15 denotes the grooves of the frame.

When the lateral panels 5 of the light dispersion member 12 are pressed into the grooves 15 of the frame 11 while slightly bending the lateral panels 5 inward, the protrusions 19 of the grooves are fitted into the holes 9 of the lateral panels. Once the protrusions are fitted, the lateral panels widen toward the outside due to the resilience inherent in the panels, and since the protrusions 19 of the grooves are firmly fitted into the holes 9 of the lateral panels, the lateral panels are not easily released from the frame. The situation in which the protrusions of the grooves are fitted into the holes of the lateral panels is explained with reference to the drawings.

Fig. 5 is an enlarged perspective view of the portion designated by the numeral 601 1 in Fig. 6.

In Fig. 5, numeral 11 denotes the frame, numeral 515 denotes the inner side of the outer wall of one of the grooves of the frame, numeral 19 denotes a protrusion that is provided at the inner side of the outer wall of the groove of the frame, numeral 2 denotes the upper panel of the light dispersion member, numeral 5 denotes a lateral panel of the light dispersion member, and numeral 9 denotes a hole provided in the lateral panel of the light dispersion member.

As shown in Fig. 5, the protrusions 19 in the grooves are fitted into the holes that are provided in the lateral panel. When the frame into which the light dispersion member has been fitted is turned over in this state, then the light dispersion member will not be separated from the frame even when the light dispersion member faces downward.

The situation in which the light dispersion member is fitted into the frame is illustrated by way of an example of another location.

Fig. 7 is an enlarged perspective view of the portion designated 602 in Fig. 6.

In Fig. 7, numerals 3 and 4 denote lateral panels, numeral 9 denotes the holes provided in the lateral panels, and numeral 19 denotes the protrusions. As shown in Fig. 7, each of the lateral panels of the light dispersion member according to this embodiment is attached by the protrusions provided in the grooves of the frame and the holes provided in the lateral panels.

Referring to the drawings, the following is an explanation of the angles defined by the lateral panels and the upper panels.

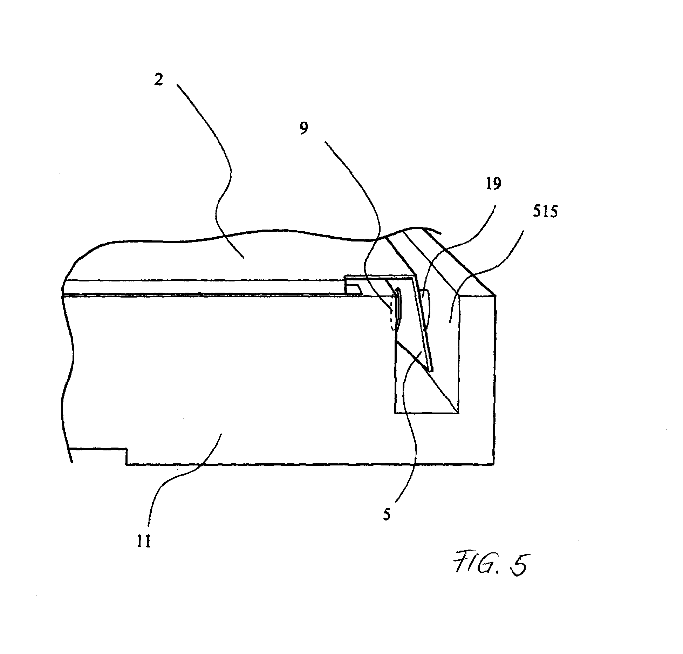

Fig. 4 is a cross-sectional view taken along the line Z-Z in Fig. 6.

In Fig. 4, numeral 15 denotes a groove of the frame, numeral 2 denotes the upper panel of the light dispersion member, numeral 5 denotes a lateral panel of the light dispersion member, numeral 9 denotes a hole provided in the lateral panel, numeral 19 denotes a protrusion provided at the inner side of the outer wall of the groove 15, numeral 401 denotes a gap between the front end of the protrusion 19 and the inner side of the inside wall of the groove 15, and A denotes the angle defined by the upper panel 2 and the lateral panel 5.

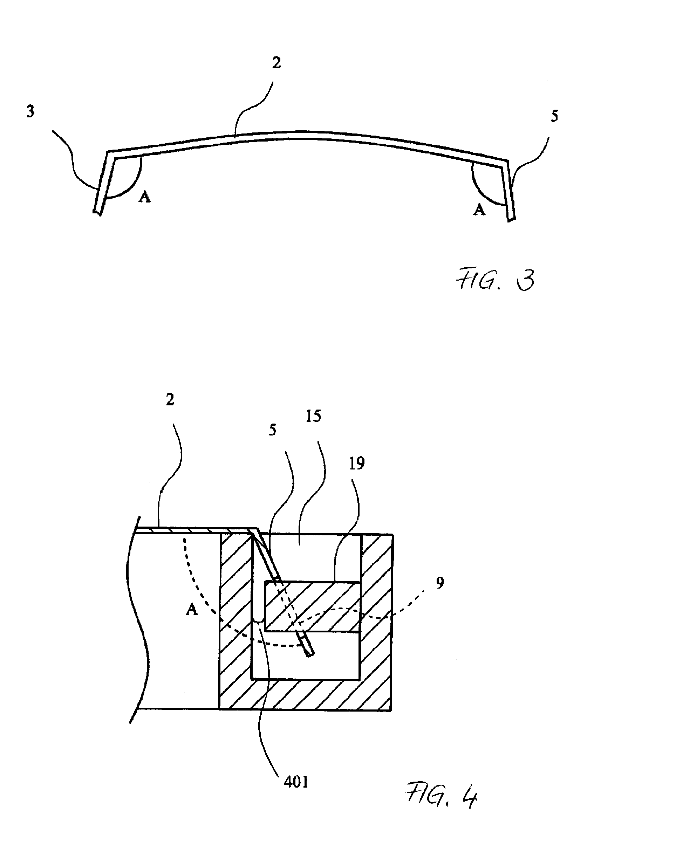

To press the lateral panel 5 into the groove 15 of the frame 11, the lateral panel 5 is pressed through the gap 401 between the inner wall on the inner side of the groove 15 and the protrusion 19. Accordingly, the protrusion 19 enters into the hole 9. In this case, when the lateral panel 5 is pushed through the gap 401 between the inner wall on the inner side of the groove 15 and the protrusion 19, the lateral panel 5 is temporarily bent further in a direction in which the angle A becomes smaller, but after the protrusion 19 has been fitted into the hole 9, the lateral panel 5 widens up toward the outside due to the resilience inherent in the panel, and the angle A returns somewhat to its original state. If the angle A in the stationary state after the protrusion 19 has been fitted into the hole 9 differs considerably from the angle prior to fitting the lateral panel into the groove, then a slight bending will often be acting on the upper panel and a bending as shown in Fig. 3 may result. It was found by experiments that in order to minimize this problem, the range of the angle A is important and is suitably set to at least 90° and at most 135°.

Fig. 3 is a cross-sectional view taken along the line Y-Y in Fig. 1. The bending is explained with reference to this drawing.

In Fig. 3, numeral 2 denotes the upper panel, numerals 3 and 5 denote lateral panels, and A denotes the angle defined by the upper panel 2 and the lateral panel 5. Even if there is no bending of the upper panel 2 in a state in which no force acts on the lateral panels, if the angle A in the state after the light dispersion member is fitted into the frame differs considerably from the angle A in the state prior to the fitting of the light dispersion member, then there will be bending of the upper panel 2.

It should be noted that the thickness of the light dispersion panel according to the present embodiment is about 0.5 mm, the length of the longer side of the rectangular upper panel is about 731.5 mm and the length of the shorter side of the rectangular upper panel is about 424 mm. The light dispersion panel is made of polycarbonate.

Furthermore, in the present embodiment, the lateral panels are provided with holes to fasten them to the frame, but instead of providing the lateral panels with holes, the light dispersion member may also be characterized merely in that the force maintaining the planarity of the light dispersion panel is increased by folding the edges of a thin light dispersion panel.

The following is an explanation of a second embodiment. In this embodiment, the configuration of the light dispersion member is such that no holes are provided in the lateral panels, and the front ends of the lateral panels are provided with lower edge panel portions by folding the front ends of the lateral panels further to the outside. The configuration of the attachment grooves of the frame is adapted to the configuration of the light dispersion member, and includes a projecting portion projecting to the outside at an intermediate portion of the grooves. This is explained in detail with reference to the drawings.

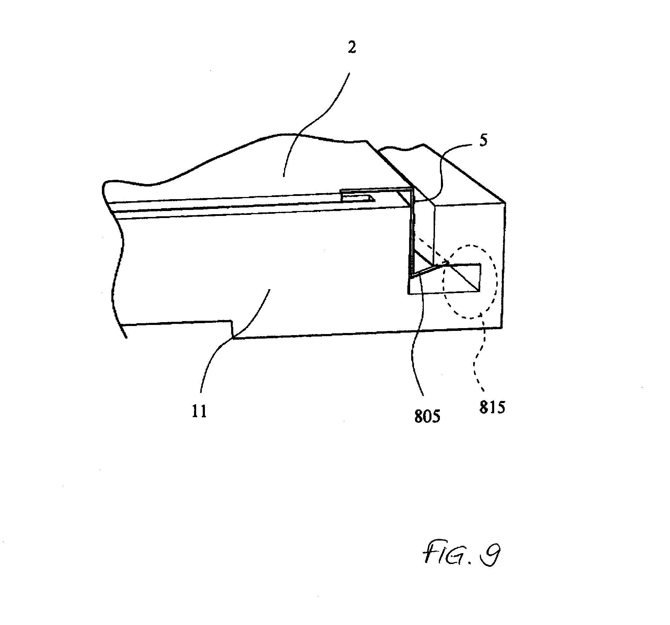

Fig. 8 is a perspective view showing the overall configuration of a light dispersion member for an LCD device and a frame in accordance with a second embodiment of the present invention.

In Fig. 8, numeral 803 denotes a lower edge panel portion provided at the front end of a lateral panel 3, numeral 804 denotes a lower edge panel portion provided at the front end of a lateral panel 4, numeral 805 denotes a lower edge panel portion provided at the front end of a lateral panel 5, and numeral 806 denotes a lower edge panel portion provided at the front end of a lateral panel 6.

A characteristic feature of the light dispersion member for an LCD device according to this embodiment is that instead of providing the lateral panels with holes, they are provided with lower edge panel portions. In correspondence with this feature, the grooves of the frame are provided with projecting portions projecting outward at an intermediate portion of the grooves. Also in the light dispersion member and frame for an LCD device according to this second embodiment, as in the case of light dispersion member and frame for an LCD device according to the first embodiment, lateral panels 3 to 6 of the light dispersion member 12 are pressed into grooves 13 to 16 of the frame 11. Thus, the lower edge panel portions 803 to 806 of the respective lateral panels 3 to 6 are fitted into the projecting portions of the respective grooves. This is explained with reference to the drawings.

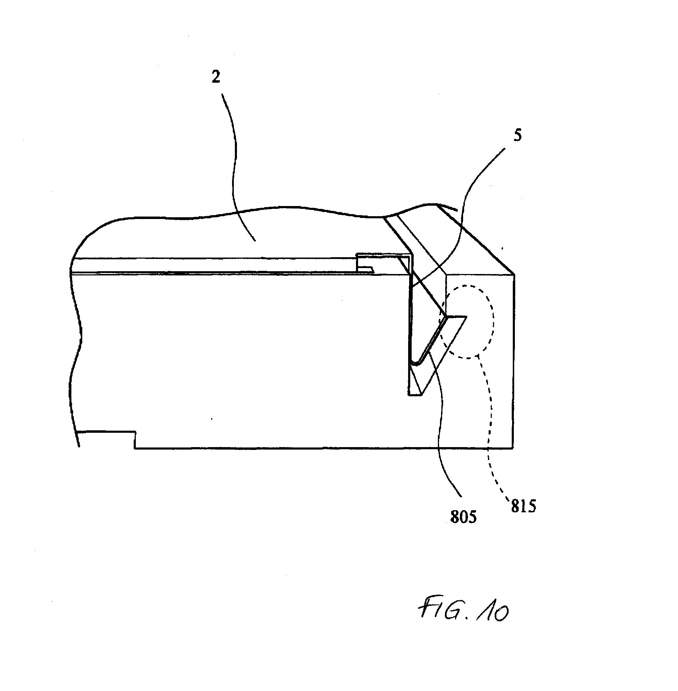

Fig. 9 is a perspective view illustrating the state in which the light dispersion member for an LCD display according to the second embodiment is fitted into the frame.

In Fig. 9, numeral 2 denotes the upper panel of the light dispersion member, numeral 5 denotes a lateral panel, numeral 805 denotes the lower edge panel portion of the lateral panel 5, numeral 11 denotes the frame and numeral 815 denotes a projecting portion of a groove of the frame.

When the lateral panel 5 is pressed into the groove, the lower edge panel portion 805 slides into the groove while being folded over to an acute angle, widens to the outside due to its inherent restoring force at the projecting portion 815 of the L-shaped groove, and as a result the light dispersion member is fastened to the frame.

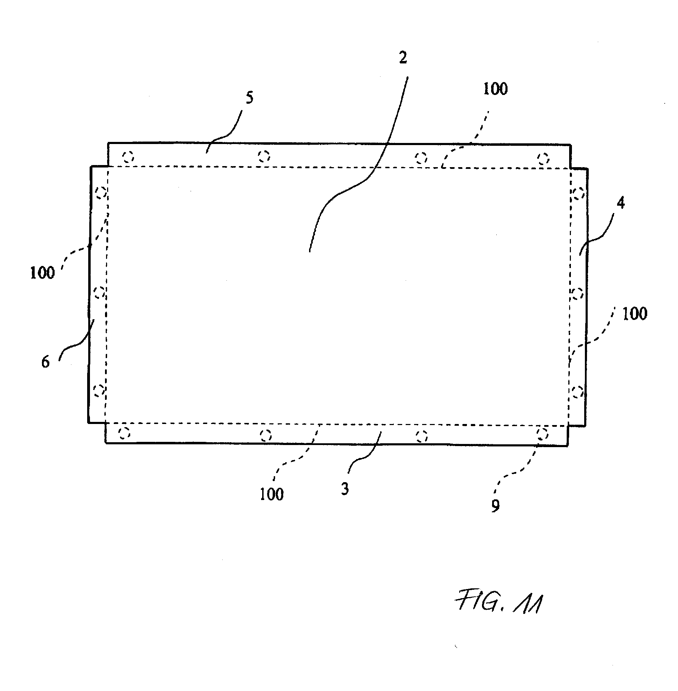

Fig. 10 is a perspective view showing an example of another embodiment in which the light dispersion member is fastened to the frame by letting the lower edge panel portion 805, which is fabricated by folding over the front end of the lateral panel to an even acuter angle, to engage the projecting portion 815 at an intermediate portion of the groove of the frame.

In Fig. 10, numeral 5 denotes a lateral panel, 805 denotes the lower edge panel portion that is fabricated by folding over the front end of the lateral panel to the outside at an even acuter angle than in Fig. 9, and numeral 815 denotes a projecting portion widening the groove towards the outside at an intermediate location of the groove.

Also in this embodiment, when the lateral panel 5 is pressed into the groove, the lower edge panel portion 805 is slid into the groove while folding it to an acute angle, and is widened toward the outside below the projecting portion 815 at which the groove is widened to the side, thereby fixing the light dispersion member to the frame. Moreover, once the light dispersion member is fixed to the frame, it cannot be easily separated therefrom.

Next, a method for manufacturing a light dispersion member according to this embodiment is explained with reference to the drawings. However, this manufacturing method is merely given as an example, and there is no limitation to this method for manufacturing a light dispersion member according to the present invention.

Fig. 11 shows a planar development of a light dispersion member according to the first embodiment.

In Fig. 11, numeral 2 denotes the upper panel, and numerals 3 to 6 denote the lateral panels. Numeral 100 denotes folding lines indicating the folding positions.

First, a light dispersion panel of low thickness is cut with a press to the shape shown in the planar development drawing of Fig. 11, while at the same time cutting the holes in the lateral panels.

Then, shallow slits are applied at the folding lines with a press or the like. After this, the light dispersion panel is folded along the folding lines with the press or the like.

It is also possible to perform the cutting of the shape shown in the planar development drawing, the cutting of the holes in the lateral panels and the folding step simultaneously with a press or the like.

It should be noted that since this pressing step is known in the art, further explanations thereof are omitted.

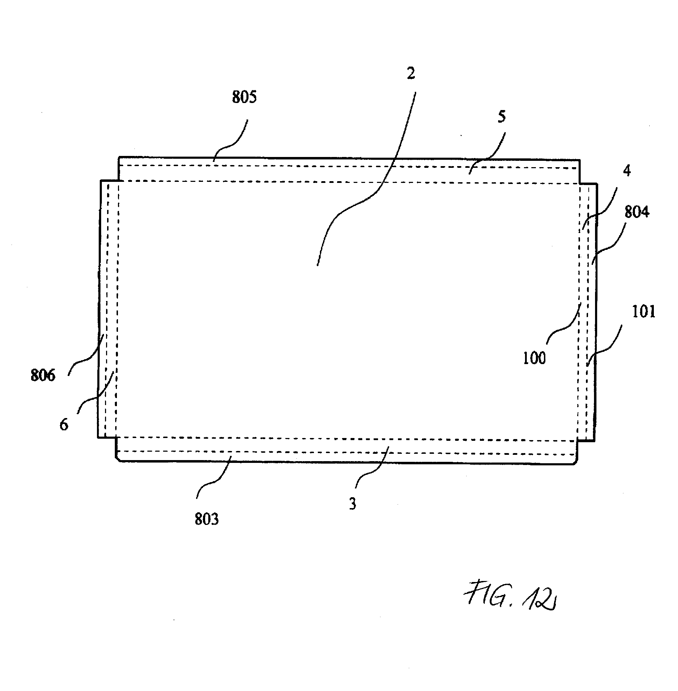

Fig. 12 shows a planar development of a light dispersion member according to the second embodiment.

In Fig. 12, numerals 3 to 6 denote the lateral panels, numerals 803 to 806 denote the lower edge panel portions provided at the front end of the lateral panels, numeral 100 denotes the folding lines for producing the lateral panels, and numeral 101 denotes the folding lines for providing the lower edge panel portions. The folding step is the same as for the first embodiment.

It should be noted that these manufacturing methods are merely examples, and the light dispersion members may also be manufactured by other methods.

Moreover, in the present embodiment, polycarbonate is used as the material of the light dispersion panel, but it is also possible to use other suitable materials.

Furthermore, the present invention not also encompasses a single light dispersion member but also a light dispersion unit obtained by combining the light dispersion member and a frame into which the light dispersion member is fitted.

### LIST OF REFERENCE NUMERALS

- 2: upper panel
- 3: lateral panel
- 4: lateral panel
- 5: lateral panel
- 6: lateral panel
- 9: hole
- 11: frame
- 12: light dispersion member
- 13: groove provided in the frame
- 14: groove provided in the frame
- 15: groove provided in the frame
- 16: groove provided in the frame
- 19: protrusions provided on the inner side of the outer wall of the grooves

## Claims

1. A light dispersion member for a liquid crystal display device, the light dispersion member being obtained by folding a light dispersion panel that is so thin that it bends when supported at two opposing edges and held horizontally,
the light dispersion member comprising a rectangular upper panel and lateral panels extending away from the rectangular upper panel by folding at the four sides of the upper panel,
wherein a force that prevents the thin upper panel from being bent and that maintains its planarity is strengthened by folding the lateral panels at the four sides of the upper panel, such that the lateral panels extend away from the rectangular upper panel.

2. The light dispersion member for a liquid crystal display device according to claim 1,
wherein the lateral panels comprise holes; and
wherein, when the lateral panels of the light dispersion member for a liquid crystal display device are inserted into attachment grooves of a frame having said grooves and protrusions provided at an inner side of an outer wall of the grooves, the protrusions fit into the holes, and the light dispersion member for a liquid crystal display device is fastened to the frame, such that it is not easily separated therefrom.

3. The light dispersion member for a liquid crystal display device according to claim 1,
wherein the lateral panels each comprise a lower edge panel portion that is folded outward from a lower edge of the lateral panel;
wherein, when the lateral panels of the light dispersion member for a liquid crystal display device are inserted into attachment grooves of a frame, which have a projecting portion projecting to the outside at an intermediate portion of the grooves, the lower edge panel portions are fitted into the projecting portions, and the light dispersion member for a liquid crystal display device is fastened to the frame, such that it is not easily separated therefrom.

4. The light dispersion member for a liquid crystal display device according to any of claims 1 to 3,
wherein an angle defined by the lateral panels and the upper panel is at least 95 degrees and at most 135 degrees.

5. The light dispersion member for a liquid crystal display device according to any of claims 1 to 4,
wherein a longer side of the rectangular upper panel has a length of approximately 640 to 780 mm, and a shorter side of the rectangular upper panel has a length of approximately 370 to 450 mm, and a thickness of the panel is approximately 0.45 to 0.55 mm.

6. The light dispersion member for a liquid crystal display device according to any of claims 1 to 5,
wherein a material of the light dispersion panel is polycarbonate.

7. A light dispersion unit for a liquid crystal display device, the light dispersion unit comprising:
a light dispersion member according to any of the claims 1 to 6; and
a frame into which the light dispersion member is fitted;
wherein the lateral panels comprise holes;
wherein the frame comprises grooves into which the light dispersion member is fitted;
wherein protrusions are provided at an inner side of an outer wall of the grooves;
wherein, when the lateral panels of the light dispersion member for a liquid crystal display device are inserted into the grooves, the protrusions fit into the holes, and the light dispersion member for a liquid crystal display device is fastened to the frame, such that it is not easily separated therefrom.

8. A light dispersion unit for a liquid crystal display device, the light dispersion unit comprising:
a light dispersion member according to any of the claims 1 to 6; and
a frame into which the light dispersion member is fitted;
wherein the light dispersion member comprises a rectangular upper panel and lateral panels that extend away from the rectangular upper panel by being folded at the four sides of the upper panel;
wherein the lateral panels each comprise a lower edge panel portion that is folded outward from a lower edge of the lateral panel;
wherein the frame comprises grooves for fitting the light dispersion member into the frame;
wherein the grooves comprise a projecting portion projecting to the outside at an intermediate portion of the grooves;
wherein, when the lateral panels of the light dispersion member for a liquid crystal display device are inserted into the grooves of the frame, the lower edge panel portions engage the projecting portions, and the light dispersion member for a liquid crystal display device is fastened to the frame, such that it is not easily separated therefrom.

9. A method for manufacturing a light dispersion member for a liquid crystal display device using a light dispersion panel that is so thin that it bends when supported at two opposing edges and held horizontally, the method comprising:
a step of cutting the light dispersion panel into a rectangular shape having a cutout at each of its comers; and
a step of folding the edges of the light dispersion panel, which has been cut into the rectangular shape having a cutout at each of its corners, to fabricate lateral panels extending away from the rectangular upper panel from the rectangular upper panel;
wherein a force that prevents the thin upper panel from being bent and that maintains its planarity is strengthened by folding the lateral panels at the four sides of the upper panel, such that the lateral panels extend away from the rectangular upper panel.

10. A method for manufacturing a light dispersion member for a liquid crystal display device using a light dispersion panel that is so thin that it bends when supported at two opposing edges and held horizontally, the method comprising:
a step of cutting the light dispersion panel into a rectangular shape having a cutout at each of its comers;
a step of opening holes at the edges of the optical dispersion panel; and
a step of folding the edges of the light dispersion panel, which has been cut into the rectangular shape having a cutout at each of its corners, to fabricate lateral panels extending away from the rectangular upper panel from the rectangular upper panel;
wherein a force that prevents the thin upper panel from being bent and that maintains its planarity is strengthened by folding the lateral panels at the four sides of the upper panel, such that the lateral panels extend away from the rectangular upper panel; and
wherein, when the lateral panels of the light dispersion member for a liquid crystal display device are inserted into attachment grooves of a frame having said attachment grooves and protrusions provided at an inner side of an outer wall of the grooves, the protrusions fit into the holes, and the light dispersion member for a liquid crystal display device is fastened to the frame, such that it is not easily separated therefrom.

11. The method for manufacturing a light dispersion member for a liquid crystal display device according to claim 9 or 10,
wherein an angle defined by the lateral panels and the upper panel is at least 95 degrees and at most 135 degrees.

12. The method for manufacturing a light dispersion member for a liquid crystal display device according to any of claims 9 to 11,
wherein a longer side of the rectangular upper panel has a length of approximately 640 to 780 mm, a shorter side of the rectangular upper panel has a length of approximately 370 to 450 mm, and a thickness of the panel is approximately 0.45 to 0.55 mm.

13. A method for manufacturing a light dispersion unit for a liquid crystal display device, the light dispersion unit comprising a light dispersion member using a light dispersion panel that is so thin that it bends when supported at two opposing edges and held horizontally, and a frame into which the light dispersion member is fitted; the method comprising:
a step of cutting the light dispersion panel into a rectangular shape having a cutout at each of its comers;
a step of opening holes at the edges of the optical dispersion panel;
a step of fabricating lateral panels extending away from the rectangular upper panel from the rectangular upper panel by folding the edges of the light dispersion member, which has been cut into a rectangular shape having a cutout at each of its comers;
a step of fabricating grooves in the frame, the grooves being such that the light dispersion member can be fitted into them; and
a step of fabricating protrusions on the inner side of an outer wall of the grooves;
wherein a force that prevents the thin upper panel from being bent and that maintains its planarity is strengthened by folding the lateral panels at the four sides of the upper panel, such that the lateral panels extend away from the rectangular upper panel; and
wherein, when the lateral panels of the light dispersion member for a liquid crystal display device are inserted into grooves of a frame, which has attachment grooves and protrusions provided at an inner side of an outer wall of the grooves, the protrusions fit into the holes, and the light dispersion member for a liquid crystal display device is fastened to the frame, such that it is not easily separated therefrom.

14. The method for manufacturing a light dispersion unit for a liquid crystal display device according to claim 13,
wherein an angle defined by the lateral panels and the upper panel is at least 95 degrees and at most 135 degrees.

15. The method for manufacturing a light dispersion unit for a liquid crystal display device according to claim 13 or 14,
wherein a longer side of the rectangular upper panel has a length of approximately 640 to 780 mm, a shorter side of the rectangular upper panel has a length of approximately 370 to 450 mm, and a thickness of the panel is approximately 0.45 to 0.55 mm.
